## Europäisches Patentamt
## European Patent Office
## Office européen des brevets

(11) Numéro de publication: **0 059 815**
**B1**

(12) **FASCICULE DE BREVET EUROPEEN**

(45) Date de publication du fascicule du brevet: **11.07.84**

(21) Numéro de dépôt: **81400344.8**

(22) Date de dépôt: **06.03.81**

(51) Int. Cl.³: **A 01 D 85/00, A 01 F 15/00**

(54) **Dispositif de commande de liage pour presses à balles cylindriques.**

(43) Date de publication de la demande:
**15.09.82 Bulletin 82/37**

(45) Mention de la délivrance du brevet:
**11.07.84 Bulletin 84/28**

(84) Etats contractants désignés:
**DE FR GB IT NL**

(56) Documents cités:
**DE - A - 2 640 563**
**DE - A - 2 831 700**
**FR - A - 2 366 786**
**US - A - 4 094 239**

(73) Titulaire: **JOHN DEERE (Société Anonyme)**
**8, Quai de la Madeleine**
**F-45000 Orléans (FR)**

(72) Inventeur: **Diot, Joel André**
**Les Crayes**
**F-70100 Chargey les Gray (FR)**

(74) Mandataire: **Pruvost, Marc Henri**
**Cabinet ORES 6, Avenue de Messine**
**F-75008 Paris (FR)**

Courier Press, Leamington Spa, England.

## Description

La présente invention concerne d'une façon générale les presses à balles cylindriques et plus particulièrement un dispositif de commande de liage pour les presses de ce type. Les presses à balles cylindriques sont d'un type général bien connu. Elles comprennent des jeux de bandes ou courroies qui, par leur déplacement, forment par enroulement à l'intérieur d'une chambre ménagée dans le corps de la presse une balle de forme générale cylindrique à partir de produits de récolte, notamment de fourrage ou de foin, ramassés sur le champ au cours de la progression de la presse. Il est usuel, avant le déchargement de la balle cylindrique à partir de la presse, d'assuer son liage.

Cette opération, qui est réalisée à l'aide d'un lien constitué généralement par une ficelle, est effectuée de façon connue au moyen d'un dispositif comprenant un organe guide-ficelle déplacé pendant l'opération de liage en un mouvement de va-et-vient transversalement à la presse, par exemple devant l'orifice d'entrée des produits récoltés à partir du champ. La ficelle, qui provient d'une réserve appropriée, est guidée par cet organe et son extrémité est saisie par les produits de récolte constituant la balle á la fin de l'opération de formation de celle-ci, de sorte qu'elle est enroulée autour de cette balle sous l'effet de la rotation de cette dernière entre les bandes ou courroies et que ce mouvement d'enroulement se conjugue à une répartition des spires de ficelle ainsi formées sur la longueur de la balle du fait du mouvement de balayage transversal résultant du déplacement de l'organe guide-ficelle.

Divers moyens ont déjà été proposés pour commander le mouvement de balayage transversal de l'organe guide-ficelle. Ainsi, il est déjà connu de provoquer le mouvement requis sous l'effet de la traction exercée sur la ficelle de liage lors de son enroulement autour de la balle (demandes de brevets allemands 2 640 563 et 2 831 700) et l'invention concerne plus spécialement les dispositifs de ce type. Elle concerne de manière plus précise encore les dispositifs dans lesquels la ficelle provenant d'une boîte à ficelle ou réserve équivalente prévue sur la presse passe à l'intérieur d'un bras tubulaire monté de façon pivotante et dont l'extrémité libre effectue, pendant l'opération de liage, un lent mouvement, de balayage en face de l'orifice d'entrée des produits de récolte dans la chambre de la presse ou d'un orifice équivalent.

Le but de l'invention est de créer un dispositif de commande de ce type général fournissant, par des moyens simples, un contrôle fiable du mouvement de balayage requis.

L'invention est matérialisée dans un dispositif de commande de liage pour presses à balles cylindriques du type comprenant un bras guide-ficelle monté de façon pivotante dans une position telle que son extrémité libre puisse effectuer un mouvement de balayage transversal relativement à la chambre de formation de la balle de la presse, caractérisé en ce que sur ce bras pivotant et dans une position écartée de son axe de pivotement est fixé un support dans lequel tourillonne un arbre vertical portant, d'une part, une poulie ou analogue sur laquelle s'enroule la ficelle de liage entre la réserve de ficelle et le bras guide-ficelle tubulaire et, d'autre part, une roue dentée ou analogue en prise avec un organe d'engrènement s'étendant transversalement à la presse, de telle sorte que la traction exercée sur la ficelle par son appel par la balle lors du liage provoque la rotation de cette poulie et par l'intermédiaire de l'arbre vertical, celle de cette roue dentée, qui se déplace alors sur cet organe d'engrènement transversal en assurant le mouvement de balayage par pivotement du bras guide-ficelle.

Suivant un mode de réalisation paraissant avantageux, l'organe d'engrènement transversal est constitué par une chaîne ou analogue avec laquelle la roue dentée est en prise, cette chaîne passant sur deux roues dentées disposées latéralement, et le support de bras guide-ficelle pivotant est constitué par un moyeu à effet unidirectionnel. On sait que, dans les presses de ce type, le bras guide-ficelle pivotant occupe normalement, pendent la formation de la balle, une position de repos située d'un côté de la presse, et qu'il est amené rapidement, par exemple par un ressort, dans une position de départ située sur le côté opposé de cette presse au moment du déclenchement de l'opération de liage. Lorsque le bras guide-ficelle est monté sur un moyeu à effet unidirectionnel, l'arbre traversant ce moyeu et portant la poulie sur laquelle s'enroule la ficelle de liage et la roue dentée est emphêché de tourner pendant ce pivotement du bras jusqu'à sa position de départ. En conséquence, la chaîne avec laquelle cette roue dentée est en prise peut alors se déplacer autour des roues sur lesquelles elle passe, pour permettre ce pivotement du bras.

Suivant une réalisation avantageuse, afin d'obtenir un mouvement de pivotement suffisamment lent du bras pendant l'opération de liage, l'une des roues dentées recevant la chaîne formant l'organe d'engrènement transversal est calée sur un arbre qui porte églement une poulie sur laquelle la ficelle s'enroule entre la réserve de ficelle et le bras guide-ficelle. Il en résulte, sous l'effet de la traction exercée par la ficelle appelée par la balle pendant l'opération de liage, un entraînement en rotation à la fois de la première poulie et de la roue dentée associée, prévus sur l'arbre traversant le moyeu à effet unidirectionnel, et de la seconde poulie et de la roue dentée associée sur laquelle passe la chaîne, et ainsi également de cette chaîne. Les diamètres des différents éléments sont alors déterminés de façon telle que le mouvement de pivotement du bras résultant de l'engrènement de la première roue dentée avec le chaîne s'effectue avec une vitesse réduite, fournie par un effet différentiel entre les vitesses angulaires de ces éléments.

Suivant un mode de réalisation particulier, la seconde poulie a un diamètre supérieur à celui de la première poulie associée au moyeu à effet unidirectionnel, et la ficelle s'enroule sur ces poulies de façon à les faire tourner en sens opposés. La première roue dentée est alors animée d'une vitesse angulaire supérieure à celle des roues dentées sur lesquelles passe la chaîne. En choisissant pour cette première roue dentée un diamètre supérieur à celui de la poulie associée, par exemple sensiblement égal à celui des autres roues dentées, on va alors obtenir pour le bras guide-ficelle un lent mouvement de pivotement depuis sa position de départ vers sa position de repos, à une vitesse qui est déterminée par la différence entre la vitesse de défilement de la chaîne et la vitesse angulaire de la roue dentée associée à la première poulie.

Suivant une autre particularité encore, il est prévu en combinaison avec le bras guide-ficelle une poulie compensatrice de pivotement montée à poste fixe sur le côté de la presse correspondant à la position de départ du bras et associée à deux poulies de renvoi prévues sur ce bras guide-ficelle de part et d'autre d'un orifice de passage ménagé dans ledit bras, la ficelle passant sur chacune de ces poulies de renvoi et sur la poulie compensatrice, de sorte que lors du mouvement de pivotement rapide du bras pour passer de sa position de repos à sa position de départ on dispose d'une longueur de ficelle de réserve qui permet à l'extrémité libre de la ficelle retenue entre le couteau et l'enclume d'échapper à ces derniers simplement vers la fin du mouvement de pivotement rapide du bras, pour venir ensuite pendre devant l'orifice de la presse, en facilitant la prise de la ficelle par la balle et ainsi le début de l'opération de liage.

La description qui va suivre, faite en regard des dessins annexés donnés à titre non limitatif, permettra de mieux comprendre l'invention.

La Fig. 1 est une vue en perspective d'une presse à balles cylindriques équipée du dispositif suivant l'invention.

La Fig. 2 est une vue schématique partielle du dispositif qui fait plus spécialement l'objet de l'invention.

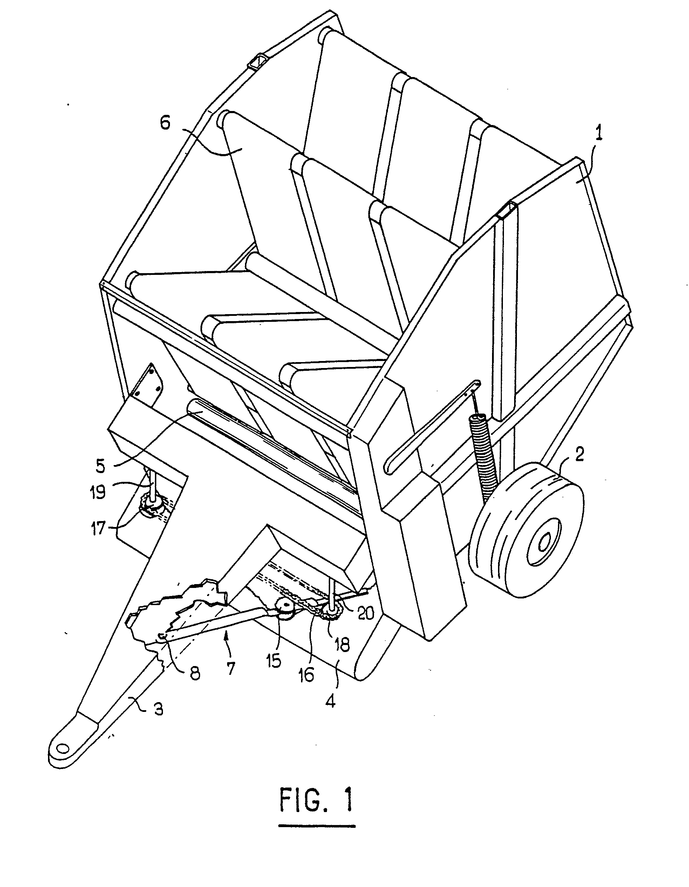

On a représenté sur la Fig. 1 une presse à balles cylindriques de type classique, comportant un corps 1 supporté par un châssis équipé de roues 2, la presse étant destinée à être attelée à un tracteur au moyen d'un timon 3. Un ramasseur représenté schématiquement en 4 est prévu de façon classique à la partie avant du corps 1 de la presse, de manière à ramasser les produits de récolte, tels que du fourrage, sur le champ et à les amener à un orifice ménagé de façon usuelle entre des rouleaux dont seul un rouleau 5 est représenté, pour leur pénétration dans une chambre prévue à l'intérieur de corps de la presse et dans laquelle une balle cylindrique se forme par enroulement de la nappe de produits entre des bandes ou courroies 6 entraînées dans le sens approprié.

L'agencement des presses à balles cylindriques de ce type est bien connu.

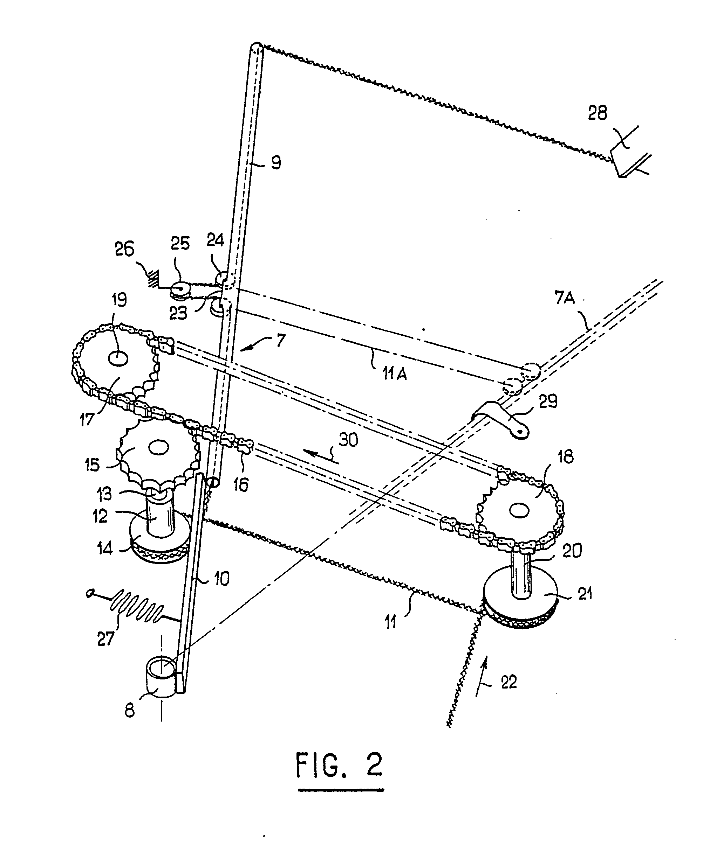

Sur les dessins, on a indiqué en 7 un bras guide-ficelle qui est monté à pivotement en 8 sur une partie de la presse. Ce bras comprend une partie tubulaire 9 (Fig. 2) et un support 10 relié au pivot 8. Le bras guide-ficelle reçoit la ficelle de liage 11 de la façon usuelle à partir d'une boîte à ficelle non représentée prévue sur la presse et assure son guidage par sa partie tubulaire 9 afin, lors due mouvement de balayage transversalement à la presse par pivotement autour du point 8, de répartir la ficelle sur la largeur de la presse pour former des spires autour de la balle cylindrique lors de son liage, également d'une façon en soi classique.

Suivant le mode de réalisation de l'invention considéré, le support 10 du bras 7 est fixé sur un moyeu 12 à effet unidirectionnel dans lequel est monté un arbre vertical 13 qui porte à une extrémité une poulie 14 et à son autre extrémité une roue dentée 15. Cette roue dentée 15 est en prise avec une chaîne sans fin 16 dont les brins sont orientés transversalement à la presse et qui passe sur deux roues dentées 17, 18 prévues sur les côtés opposés de cette presse, comme cela est bien visible sur la Fig. 1. La roue dentée 17 est montée sur un arbre 19 qui est fixe sur la presse ou bien qui peut être, si désiré, réglable transversalement à celle-ci pour maintenir la chaîne 16 sous la tension requise. La roue dentée 18 est calée sur un arbre 20 qui porte également une seconde poulie 21. Dans le cas due monde de réalisation considéré, les roues dentées 15, 17 et 18 ont le même diamètre et la poulie 14 a un diamètre plus petit que celui de la poulie 21. Le diamètre de cette dernière poulie étant, par exemple, égal à celui du cercle de base des roues dentées 15, 17 et 18.

Comme cela apparaît sur la Fig. 2, la ficelle provenant de la boîte à ficelle comme indiqué par la flèche 22 s'enroule d'abord sur la seconde poulie 21, puis en sens inverse sur la première poulie 14, pour passer ensuite à travers la partie tubulaire 9 du bras guide-ficelle 7.

Le bras guide-ficelle présente latéralement un orifice 23 de part et d'autre duquel sont prévues des poulies de renvoi 21. Une poulie 25 est montée à poste fixe sur un côté de la presse, comme indiqué schématiquement en 26. On voit à l'examen de la Fig. 2 que la ficelle 11 provenant de la poulie 14 traverse la partie tubulaire 9 du bras guide-ficelle 7, passe sur l'une des poulies de renvoi 24 pour sortir par l'orifice 23, entoure la poulie compensatrice fixe 25, puis revient vers le bras 7 en passant autour de l'autre poulie de renvoi 24 pour rejoindre l'extrémité libre de la partie tubulaire 9 du bras guide-ficelle 7.

Le bras guide-ficelle est, d'une façon en soi connue, soumis à l'action d'un ressort 27 ayant pour but de provoquer son déplacement rapide de sa position de repos à sa position de départ, comme indiqué plus loin.

Egalement sur la Fig. 2, on a indiqué schématiquement en 28 le couteau associé à une enclume prévu du côté de la presse correspondant à la position de repos due bras 7, et en 29 le verrou qui retient normalement le bras dans cette position de repos en antagonisme à l'action du ressort 27.

On décrira maintenant le fonctionnement du dispositif faisant l'objet de l'invention. Pendant la formation de la balle, le bras guide-ficelle 7 occupe la position de repos qui est indiqué en pointillé en 7a sur la Fig. 2. Dans cette position, la ficelle qui s'étend à travers la partie tubulaire 9 de bras 7 après enroulement sur les poulies 14 et 21 forme une réserve de ficelle par passage sur la poulie fixe 25, comme indiqué en traits mixtes en 11A. L'extrémité libre de la ficelle est retenue par le couteau et l'enclume 28 de la façon usuelle.

Quand la balle a atteint, à l'intérieur de la chambre de la presse, le diamètre requis, l'opération de liage est déclenchée automatiquement ou par le conducteur du tracteur, d'une manière en soi bien connue. Au moment de ce déclenchement, le verrou 29 est actionné pour libérer le bras guide-ficelle 7 qui, sous l'effet du ressort 27 passe de sa position de repos indiquée en 7A sur la Fig. 2 à sa position de départ représentée en traits pleins. Pendant ce pivotement, la longueur de ficelle de réserve indiquée en 11A est absorbée, la ficelle sortant alors par l'extrémité libre de la partie tubulaire 9 du bras 7. De façon judicieuse, la position de l'orifice 23 sur la longueur du bras guide-ficelle 7 est déterminée de manière telle que la longueur de la réserve de ficelle indiquée en 11A corresponde au débattement de l'extrémité libre du bras guide-ficelle 7, moins une faible longueur, de 100 mm par exemple, de sorte qu'au moment où le bras guide-ficelle 7 parvient dans sa position de départ la ficelle quitte le couteau de retenue 28 pour tomber devant l'orifice d'entrée de la presse, ce qui facilite sa reprise par la balle pour l'opération de liage.

La ficelle qui s'enroule autour de la balle est alors soumise à un effet de traction à partir de celle-ci. Sous l'effet de cette traction, les poulies 14 et 21 sont entraînées en rotation. La poulie 21 provoque l'entraînement de la roue dentée 18 et ainsi de la chaîne 16 dans la direction indiquée par la flèche 30 en Fig. 2. Etant donné que la poulie 14 a un diamètre inférieur à celui de la poulie 21, elle est entraînée avec une vitesse angulaire plus grande que celle de la poulie 21, et par suite que la roue dentée 18. Du fait de l'enroulement en sens inverse de la ficelle sur les poulies 21 et 14, cette poulie 14 et avec elle la roue dentée 15 tournent dans le sens anti-horaire. Etant donné que cette roue dentée 15 a le même diamètre que la roue dentée 18 et qu'elle tourne à une vitesse plus élevée, il va en résulter un lent déplacement de cette route dentée 15 le long de la chaîne 16 vers la droite quand on regarde la Fig. 2, et par conséquent un pivotement correspondant du bras guide-ficelle 7 autour de son pivot 8. La vitesse de pivotement de ce bras est fonction de la différence entre les diamètres des deux poulies 14, 21.

Quand le bras guide-ficelle 7 parvient à sa position de repos, il agit sur le verrou 29, en s'enclenchant sous celui-ci, et par ailleurs son extrémité libre provoque le sectionnement et la rétention de l'extrémité de la ficelle, pour revenir à la condition de repos précédente.

Etant donné que le moyeu 12 est un moyeu à effet unidirectionnel, la poulie 14 et la roue dentée 15 demeurent angulairement immobiles lors du passage du bras 7 de sa position de repos à sa position de départ. Il en résulte un déplacement de la chaîne 16 engrenant avec la roue dentée 15 également dans la direction indiquée par la flèche 30 et ainsi un certain appel de ficelle à partir de la boîte prévue sur la presse, ce qui fournit la longueur de ficelle s'étendant entre les poulies 21 et 14 sur la Fig. 2.

**Revendications**

1. Dispositif de commande de liage pour presses à balles cylindriques, du type comprenant un bras guide-ficelle monté de façon pivotante dans une position telle que son extrémité libre puisse effectuer un mouvement de balayage transversal relativement à la chambre de formation de la balle de la presse, et dans lequel le mouvement de pivotement du bras guide-ficelle est provoqué par la traction exercée par l'appel de la ficelle de liage, laquelle s'enroule entre la boîte à ficelle et le bras guide-ficelle sur une poulie ou analogue dont la rotation commande ce mouvement de pivotement du bras, caractérisé en ce que sur le bras pivotant (7) et dans une position écartée de son axe de pivotement (8) est fixé un support (12) dans lequel tourillonne un arbre vertical (13) portant, d'une part, la poulie (14) ou analogue sur laquelle s'enroule la ficelle de liage (11), et, d'autre part, une roue dentée (15) ou analogue, en prise avec un organe d'engrènement (16) s'étendant transversalement à la presse, de telle sorte que la traction exercée sur la ficelle par son appel par la balle lors du liage provoque de façon connue la rotation de cette poulie (14) et, par l'intermédiaire de l'arbre (13), celle de cette roue dentée (15), qui se déplace alors sur cet organe d'engrènement transversal (16) en assurant le mouvement de balayage par pivotement du bras guide-ficelle (7).

2. Dispositif suivant la revendication 1, caractérisé en ce que l'organe d'engrènement transversal est constitué par un chaîne (16) ou analogue avec laquelle la roue dentée (15) est en prise, cette chaîne passant sur deux roues dentées (17, 18) disposées latéralement, et en ce que le support (12) du bras guide-ficelle pivotant (7) est constitué par un moyeu à effet unidirectionnel.

3. Dispositif suivant la revendication 2, caractérisé en ce que l'une des roues dentées (17, 18) recevant la chaîne (16) formant l'organe d'engrènement transversal est calée sur un arbre (20) qui porte également une poulie (21) sur laquelle la ficelle (11) s'enroule entre la réserve de ficelle et le bras guide-ficlle (7).

4. Dispositif suivant la revendication 3, caractérisé en ce que les diamètres des poulies (14, 21) et des roues dentées (15, 17, 18) sont déterminées de façon telle que le mouvement de pivotement du bras (7) résultant de l'engrènement de la première roue dentée (15) avec la chaîne (16) s'effectue avec une vitesse réduite, fournie par un effet différentiel entre le vitesses angulaires de ces éléments.

5. Dispositif suivant la revendication 4, caractérisé en ce que la seconde poulie (21) a un diamètre supérieur à celui de la première poulie (14) associée au moyeu à effet unidirectionnel (12) et en ce que la ficelle (11) s'enroule sur ces poulies (14, 21) de façon à les faire tourner en sens opposés, la roue dentée (15) associée à la première poulie (14) ayant un diamètre supérieur à celui de cette première poulie.

6. Dispositif suivant la revendication 5, caractérisé en ce que le diamètre de cette première roue dentée (15) est sensiblement égal à celui des roues dentées (17, 18) sur lesquelles passe la chaine (16) formant l'organe d'engrènement transversal.

7. Dispositif suivant l'une quelconque des revendications précédentes, caractérisé en ce qu'il est prévu, en combinaison avec le bras guide-ficelle (7), une poulie compensatrice de pivotement (25) fournissant une réserve de ficelle dans la position de repos due bras (7).

8. Dispositif suivant la revendication 7, caractérisé en ce que cette poulie compensatrice (25) est montée à poste fixe sur le côté de la presse correspondant à la position de départ du bras (7) et est associée à deux poulies de renvoi (24) prévues sur ce bras guide-ficelle de part et d'autre d'un orifice (23) ménagé dans ledit bras, la ficelle (11) passant sur chacune de ces poulies de renvoi et sur la poulie compensatrice pour fournir la réserve de ficelle mentionnée.

9. Dispositif suivant la revendication 8, caractérisé en ce que la position de l'orifice (23) de passage de la ficelle (11) et des poulies de renvoi (24) sur la longueur du bras guide-ficelle (7) est définie de façon à constituer, entre la position de repos et la position de départ du bras, une réserve de ficelle un peu inférieure à la course de débattement de l'extrémité libre du bras guide-ficelle (7).

10. Presses à balles cylindriques équipées d'un dispositif suivant l'une quelconque des revendications 1 à 9.

## Patentansprüche

1. Vorrichtung zum Steuern des Bindens für Pressen für zylindrische Ballen des Typs, die einen Garnführungsarm umfasst, der schwenkbar in einer solchen Stellung montiert ist, dass sein freies Ende eine streichende Querbewegung relativ zur Ballenbildungskammer der Presse ausführen kann und in der die Schwenkbewegung des Garnführungsarmes durch die Zugwirkung die von dem Zug des Bindegarnes ausgeübt wird, welches sich zwischen dem Garnkasten und dem Garnführungsarm auf einer Rolle oder dergleichen aufrollt, deren Drehung die Schwenkbewegung des Armes steuert hervogerufen wird, dadurch gekennzeichnet dass auf dem schwenkbaren Arm (7) und in einer seiner Schwenkachse (8) abgelgenen Stellung ein Tragteil (12) befestigt ist, in welchem eine senkrechte Welle (13) drehbar ist, die einerseits die Rolle (14) oder dergleichen, auf der sich das Bindegarn (11) aufrollt, und andererseits ein Zahnrad (15) oder dergleichen trägt, welches mit einem Eingriffsorgan (16) in Eingriff steht, das sich quer zur Presse derart erstreckt, dass die Zugwirkung, die auf das Garn durch den Zug des Ballens bei der Bindung ausgeübt wird, in an sich bekannter Weise die Rotation jener Rolle (14) und mit Hilfe der Welle (13) die jenes Zahnrades (15), das sich somit auf dem quer verlaufenden Eingriffsorgan (16) unter Sicherstellung der streichenden Bewegung durch Schwenken des Garnführungsarmes (7) verstellt, hervorruft.

2. Vorrichtung nach Anspruch 1, dadurch gekennzeichnet, dass das quer verlaufende Eingriffsorgan durch eine Kette (16) oder dergleichen gebildet wird, mit der das Zahnrad (15) in Eingriff steht, wobei diese Kette über zwei Zahnräder (17, 18) läuft, die seitlich angeordnet sind, und dass der Tragteil (12) des schwenkbaren Garnführungsarmes (7) durch eine nur in einer Richtung wirksame Radnabe gebildet ist.

3. Vorrichtung nach Anspruch 2, dadurch gekennzeichnet, dass eines der Zahnräder (17, 18), welche die das quer verlaufende Eingriffsorgan bildende Kette (16) aufnehmen, auf einer Welle (20) festsitzt, die gleichfalls eine Rolle (21) trägt, auf der das Garn (11) sich zwischen dem Garnvorrat und dem Garnführungsarm (7) aufrollt.

4. Vorrichtung nach Anspruch 3, dadurch gekennzeichnet, dass die Durchmesser der Rollen (14, 21) und der Zahnräder (15, 17, 18) so bestimmt sind, dass die Schwenkbewegung des Armes (7), die aus dem Eingriff des ersten Zahnrades (15) mit der Kette (16) resultiert, sich mit einer verminderten Geschwindigkeit, die sich durch einen Differentialeffekt zwischen den Winkelgeschwindigkeiten dieser Elemente ergibt, auswirkt.

5. Vorrichtung nach Anspruch 4, daduch gekennzeichnet, dass die zweite Rolle (21) einen Durchmesser hat der grösser ist als der der ersten Rolle (14) die mit der nur in einer Richtung wirksamen Radnabe (12) verbunden ist, und dass das Garn (11) sich auf diesen Rollen (14, 21) so aufrollt, dass diese sich in entgegengesetzten Richtungen drehen, wobei das der ersten Rolle (14) zugeordnete Zahnrad (15) einen Durchmesser had der grösser ist als der dieser ersten Rolle.

6. Vorrichtung nach Anspruch 5, dadurch gekennzeichnet, dass der Durchmesser jenes ersten Zahnrades (15) im wesentlichen gleich dem der Zahnräder (17, 18) ist, über die die das quer verlaufende Eingriffsorgan bildende Kette (16) läuft.

7. Vorrichtung nach irgendeinem der voranstehenden Ansprüche, dadurch gekennzeichnet, dass in Kombination mit dem Garnführungsarm (7) eine Schwenkausgleichsrolle (25) vorgesehen ist, welche in der Ruhestellung des Armes (7) einen Garnvorrat zur Verfügung stellt.

8. Vorrichtung nach Anspruch 7, dadurch gekennzeichnet, dass diese Ausgleichsrolle (25) an einer festen Stelle an der Seite der Presse montiert ist, die der Ausgangsstellung des Armes (7) entspricht, und zwei Zwischenrollen (24) zugeordnet ist, welche auf dem Garnführungsarm beiderseits einer Öffnung (23) angeordnet sind, welche in dem besagten Arm vorgesehen ist, wobei das Garn (11) über jede der Zwischenrollen und über die Ausgleichsrolle läuft, um den erwähnten Garnvorrat zur Verfügung zu stellen.

9. Vorrichtung nach Anspruch 8, dadurch gekennzeichnet, dass die Lage der Durchtriffsöffnung (23) des Garnes (11), und der Zwischenrollen (24) auf der Länge des Garnführungsarmes (7) derart bestimmt ist, dass zwischen der Ruhestellung und der Ausgangsstellung des Armes ein Garnvorrat gebildet wird, der ein wenig kleiner als der Schwenkweg des freien Endes des Garnführungsarmes (7) ist.

10. Pressen für zylindrische Ballen, die mit einer Vorrichtung nach irgendeinem der Ansprüche 1 bis 9 ausgerüstet sind.

## Claims

1. A binding control apparatus for cylindrical bale presses, of the type comprising a twine guide arm mounted pivotally in a position such that the free end thereof can perform a transverse sweep movement relative to the bale forming chamber of the press, and wherein the pivotal movement of the twine guide arm is produced by the pulling force applied by the demand for the binding twine which, between the twine box and the twine guide arm, is wound around a pulley or the like, the rotation of which causes said pivotal movement of the arm, characterised in that fixed on the pivotal arm (7) and in a position spaced from the pivot axis (8) thereof is a support (12) in which a vertical shaft (13) is journalled, the vertical shaft (13) carrying on the one hand the pulley (14) or the like around which the binding twine (11) is wound and, on the other hand, a toothed wheel (15) or the like which is engaged with a tooth engagement member (16) which extends transversely with respect to the press, whereby the pulling force applied to the twine by demand therefor by the bale in the binding operation causes, in known manner, rotation of the pulley (14) and, by way of the shaft (13), rotation of said toothed wheel (15) which is then displaced on said transverse tooth engagement member (16), producing the sweep movement by pivoting motion of the twine guide arm (7).

2. Apparatus according to claim 1 characterised in that the transverse tooth engagement member comprises a chain (16) or the like with which the toothed wheel (15) is in mesh, said chain passing around two laterally disposed toothed wheels (17, 18), and that the support (12) of the pivotal twine guide arm (7) comprises a unidirectional-action hub means.

3. Apparatus according to claim 2 characterised in that one of the toothed wheels (17, 18) carrying the chain (16) forming the transverse tooth engagement member is fixed on a shaft (20) which also carries a pulley (21) around which the twine (11) is wound between the twine store and the twine guide arm (7).

4. Apparatus according to claim 3 characterised in that the diameters of the pulleys (14, 21) and the toothed wheels (15, 17, 18) are such that the pivotal movement of the arm (7) resulting from meshing of the first toothed wheel (15) with the chain (16) takes place at a reduced speed produced by a differential effect between the angular speeds of said components.

5. Apparatus according to claim 4 characterised in that the diameter of the second pulley (21) is larger than that of the first pulley (14) which is associated with the unidirectional-action hub means (12) and that the twine (11) is wound around said pulleys (14, 21) in such a way as to cause them to rotate in opposite directions, the diameter of the toothed wheel (15) associated with the first pulley (14) being larger than the diameter of said first pulley.

6. Apparatus according to claim 5 characterised in that the diameter of said first toothed wheel (15) is substantially equal to that of the toothed wheels (17, 18) around which the chain (16) forming the transverse tooth engagement member passes.

7. Apparatus according to any one of the preceding claims characterised in that, in combination with the twine guide arm (7), there is provided a pivotal movement compensating pulley (25) providing a reserve of twine in the rest position of the arm (7).

8. Apparatus according to claim 7 characterised in that said compensating pulley (25) is mounted a fixed location on the side of the press corresponding to the initial position of the arm (7) and is associated with two guide pulleys (24) which are disposed on said twine guide arm on respective sides of an opening (23) in said arm, the twine (11) passing around each of said guide pulleys and the compensating pulley to provide said reserve of twine.

9. Apparatus according to claim 8 characterised in that the position of the opening (23) through which the twine (11) passes and the guide pulleys (24) in relation to the length of the twine guide arm (7) is so defined as to constitute, between the rest position and the initial position of the arm, a reserve of twine which is a little less than the length of the travel movement of the free end of the twine guide arm (7).

10. Cylindrical bale presses provided with an apparatus according to any one of claims 1 to 9.

FIG. 1

FIG. 2